# EUROPÄISCHE PATENTANMELDUNG

(11) **EP 2 626 574 A2**
(43) Veröffentlichungstag der Anmeldung: **14.08.2013**
(21) Anmeldenummer: 13151248.5
(22) Anmeldetag: 15.01.2013
(51) Int. Cl.: F15B 1/02, F15B 15/20

(54) **Hydropneumatischer Aktuator**

(30) Priorität: 13.02.2012 DE 102012202100
(71) Anmelder: ZF Friedrichshafen AG, 88038 Friedrichshafen (DE)
(72) Erfinder: Beck, Hubert, 53783 Eitorf (DE)

(57) **Zusammenfassung**

Hydraulischer Aktuator (1), umfassend einen Zylinder (3), in dem ein Kolben (7) an einer axial beweglichen Kolbenstange (5) einen ersten und einen zweiten Arbeitsraum (9, 11) voneinander trennt, wobei beide Arbeitsräume über eine Fluidleitung (27, 45) jeweils mit einem Ausgleichsraum (39, 51) verbunden sind und beide Arbeitsräume an eine Pumpeinrichtung (65) angeschlossen sind, die Betriebsmedium zwischen den beiden Arbeitsräumen wechselweise umpumpt, wobei innerhalb einer Fluidverbindung zwischen mindestens einem Arbeitsraum und einem Ausgleichsraum eine verstellbare Ventileinrichtung (31, 49) angeordnet ist, wobei der Zylinder mit einem Leitungsverteiler (13) verbunden ist, wobei der Leitungsverteiler die Fluidleitungen (27,45, 61) zwischen den Arbeitsräumen (9, 11) und den Ausgleichsräumen (39, 51) sowie zu der Pumpeinrichtung (65) aufweist.

## Beschreibung

Die Erfindung betrifft einen hydropneumatischen Aktuator gemäß dem Oberbegriff von Patentanspruch 1.

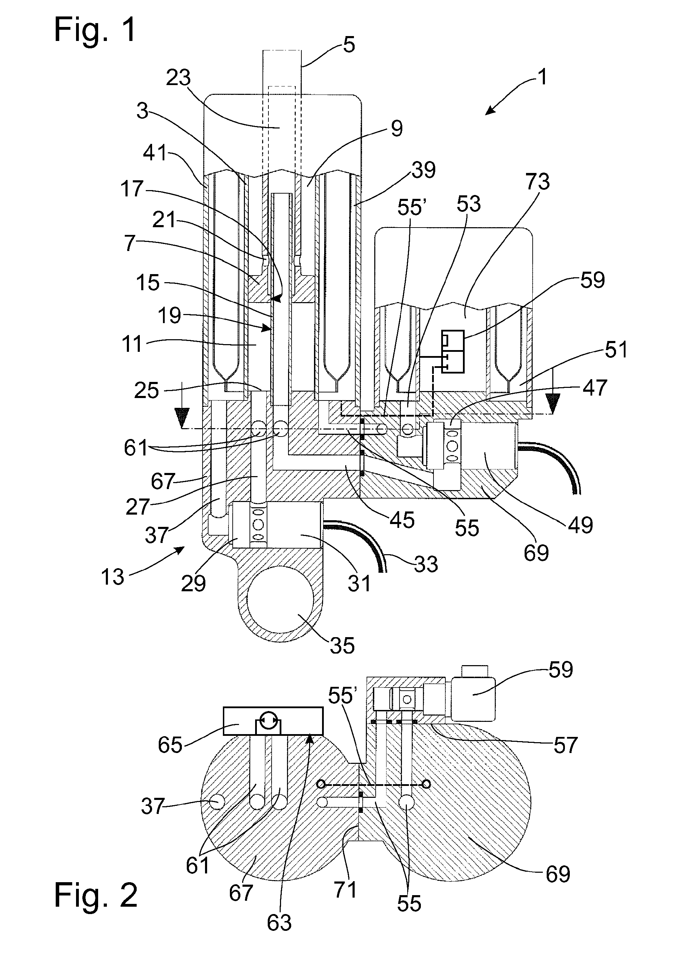

Aus der DE 10 2010 021 777 A1 ist ein hydropneumatischer Aktuator bekannt, der selbst in der einfachsten Ausführung gemäß der Figur 1 zahlreiche Baugruppen, Unterbaugruppen, Leitungen und Schnittstellen aufweist, die zu einem komplexen Gesamtaggregat führen. Die Vielzahl der Leitungen und Schnittstellen verursacht einerseits einen hohen Montageaufwand und andererseits ein hohes Leckagerisiko. Der Montageaufwand wird einerseits durch die Vielzahl der einzelnen Baugruppen verursacht, aber auch durch die Erfordernis, dass alle verwendeten Leitungen unbedingt systemgerecht montiert werden müssen, das heißt, eine Vertauschung von zwei Leitungsanschlüssen würde zu einer Fehlfunktion des Gesamtaggregates führen. Zusätzlich müssen alle Baugruppen am Fahrwerk, das heißt vielfach im Radkasten eines Fahrzeugaufbaus sicher und dauerhaft montiert sein.

Die Aufgabe der vorliegenden Erfindung besteht darin, einen hydropneumatischen Aktuator zu realisieren, bei dem die systembedingten Schwierigkeiten hinsichtlich des Montageaufwandes und der Leckagesicherheit minimiert sind.

Erfindungsgemäß wird die Aufgabe durch die Merkmale des Patentanspruchs 1 gelöst.

Durch die Verwendung des Leitungsverteilers kann vermieden werden, dass die in der Regel gekrümmte Mantelfläche des Zylinders frei von Leitungsanschlüssen bleiben kann. Der Leitungsverteiler dagegen kann ganz auf die Funktion der Leitungsführung und Anschluss von diversen Baugruppen optimiert sein.

Gemäß einem vorteilhaften Unteranspruch weist der Zylinder eine Gleichrichtungseinrichtung auf, die das vom Kolben verdrängte Betriebsmedium unabhängig von der Bewegungsrichtung der Kolbenstange dem Leitungsverteiler zuführt. Der Vorteil dieser Maßnahme besteht darin, dass man nur einen Leitungsverteiler benötigt. In weiterer konstruktiver Ausgestaltung der Erfindung begrenzt der Leitungsverteiler den Zylinder endseitig. Bevorzugt ist der Leitungsverteiler an dem der Kolbenstangenaustrittsseite entgegengesetzten Ende des Zylinders angeordnet.

Der Leitungsverteiler weist zumindest zwei Gehäuseteile auf, die über eine Kontaktfläche abgedichtet miteinander verbunden sind. Durch die mehrteilige Bauweise des Leitungsverteilers lassen sich die internen Fluidleitungen leichter spanend oder gusstechnisch herstellen. Dabei ist vorgesehen, dass die Kontaktfläche zwischen den beiden Gehäuseteilen als eine Planfläche ausgeführt ist. Eine derartige Planfläche lässt sich einerseits leicht herstellen, andererseits vor allem sehr leicht abdichten.

Für die Befestigung mindestens einer Ventileinrichtung weist das mindestens eine Gehäuse eine Aufnahme auf. Bevorzugt wird für jede Bewegungsrichtung der Kolbenstange ein separat ansteuerbares Dämpfventil verwendet.

Zusätzlich verfügt der Leitungsverteiler über eine Anschlussfläche für die Pumpeinrichtung. Eine weitere Fluidleitung zwischen den beiden Ausgleichsräumen ist ebenfalls im Leitungsverteiler ausgeführt. Gemäß einem weiteren Unteranspruch weist diese Fluidleitung zwischen den beiden Ausgleichsräumen eine steuerbare Ventil-einrichtung auf.

Auch die steuerbare Ventileinrichtung zwischen den beiden Ausgleichsräumen ist an einer äußeren Anschlussfläche des Leitungsverteilers befestigt.

Einer der Ausgleichsräume hüllt den Zylinder zumindest teilweise ein.

Des Weiteren kann ein Ausgleichsraum im Wesentlichen parallel zum Zylinder ausgeführt und am Leitungsverteiler befestigt sein. Damit sind alle Baugruppen und Einzelteile des hydraulischen Aktuators miteinander verbunden, ohne dass äußere Schlauchleitungen zwischen den mit Betriebsmedium gefüllten Räumen und Elementen notwendig sind. Auch die mechanische Fixierung der wesentlichen Baugruppen wird durch die Verwendung des Leitungsverteilers erreicht.

Anhand der folgenden Figurenbeschreibung soll die Erfindung näher erläutert werden.

Es zeigt:
- Fig. 1: hydraulischer Aktuator in einem Längsschnitt
- Fig. 2: hydraulischer Aktuator nach Figur 1 in Querschnittsdarstellung

Die Fig. 1 zeigt einen hydraulischen Aktuator 1, wie er für ein Fahrwerkssystem vorgesehen ist. Der hydraulische Aktuator 1 verfügt über einen Zylinder 3, in dem ein an einer Kolbenstange 5 befestigter Kolben 7 axial beweglich geführt ist. Der Kolben 7 unterteilt den Zylinder 3 in einen ersten und einen zweiten mit einem flüssigen Betriebsmedium gefüllten Arbeitsraum 9; 11. In dieser vereinfachten Darstellung der Figur 1 ist der Kolben ohne zusätzliche Dämpf- oder Überdruckventile dargestellt, die jedoch je nach Erfordernis durchaus am Kolben 7 ausgeführt sein können. Endseitig ist der Zylinder 3 mit einem Leitungsverteiler 13 verbunden.

Ausgehend von dem Leitungsverteiler 13 erstreckt sich ein Standrohr 15 in Richtung der zumindest abschnittsweise hohl ausgeführten Kolbenstange 5. Der Kolben 7 gleitet mit seiner inneren abgedichteten Mantelfläche auf einer äußeren Oberfläche 19 des Standrohres 15. Selbst bei maximaler Ausfahrposition des Kolbens- bzw. der Kolbenstange 5; 7 in Richtung des ersten Arbeitsraumes 9 besteht eine axiale Überdeckung zwischen dem Kolben 7 und dem Standrohr 15. Die Kolbenstange 5 verfügt über mindestens eine radiale Überlauföffnung 21, die den ersten Arbeitsraum 9 mit einem Hohlraum 23 in der Kolbenstange 5, in den das Standrohr 15 eintaucht, verbindet, so dass Dämpfmedium bei einer Ausfahrbewegung über die Überlauföffnung 21 und weiter durch den Hohlraum 23, dem Standrohr 15 dem Leitungsverteiler 13 zuführt. Radial versetzt zum Standrohr 15 verfügt der Leitungsverteiler 13 über mindestens eine Anschlussöffnung 25, die den zweiten Arbeitsraum 11 über eine erste Fluidleitung 27 mit einer Aufnahme 29 verbindet, in der ein Dämpfventil 31 angeordnet ist. Das Standrohr 15 bildet somit eine mögliche Ausführungsform für eine Gleichrichtungseinrichtung, die das vom Kolben 7 verdrängte Betriebsmedium, unabhängig von der Bewegungsrichtung der Kolbenstange 5, dem Leitungsverteiler 13 zuführt.

Wie aus der Figur 1 ersichtlich ist, verläuft die Hauptachse des in der Aufnahme 29 angeordneten Dämpfventils 31 horizontal zur Hauptachse des gesamten hydraulischen Aktuators 1. Diese Anordnung hat den Vorteil, dass einerseits eine einfache Entlüftung des Dämpfventils 31 möglich ist und andererseits ein Versorgungskabel 33 für das ansteuerbare Dämpfventil 31 außerhalb eines Anschlussorganes 35 verläuft, das zur Verbindung des hydraulischen Aktuators 1 innerhalb des Fahrwerks dient. Das im Rahmen einer Einfahrbewegung des Kolbens 7 aus dem zweiten Arbeitsraum 11 über das Dämpfventil 31 verdrängte Betriebsmedium gelangt über eine zweite Fluidleitung 37 in einen ersten Ausgleichsraum 39. Der ringförmige Ausgleichsraum 39 wird von einem äußeren Behälter 41 begrenzt, der an dem Leitungsverteiler 13 befestigt ist und den Zylinder 3 zumindest teilweise einhüllt. In dem ersten Ausgleichsraum 39 ist eine kompressible Gasblase 43 montiert. Alternativ kann auch ein axial beweglicher Trennkolben verwendet werden, der einen Gasraum von einem mit Betriebsmedium gefüllten Ringraum zwischen dem Behälter 41 und dem Zylinder 3 trennt.

Ausgehend von dem Standrohr 15 erstreckt sich eine dritte Fluidleitung 45 zu einer zweiten Aufnahme 47, in der ein zweites Dämpfventil 49 angeordnet ist, das das bei einer Kolbenstangenausfahrbewegung verdrängte Betriebsmedium drosselt und einem zweiten Ausgleichsraum 51 zuführt. Der zweite Ausgleichsraum 51 ist ebenfalls an dem Leitungsverteiler 13 befestigt und erstreckt sich im Wesentlichen parallel zum Zylinder 3 bzw. Behälter 41. Auch in dem zweiten Ausgleichsraum 51 ist wahlweise eine Gasblase 43 oder ein axial beweglicher Trennkolben angeordnet. Selbstverständlich ist auch eine an sich bekannte Trennmembran möglich. Zwischen dem Dämpfventil 49 und dem zweiten Ausgleichsraum 51 erstreckt sich innerhalb des Leitungsverteilers 13 eine vierte Fluidleitung 53.

Zusätzlich zu den bereits beschriebenen Fluidleitungen 27; 37: 45; 53 besteht eine fünfte Fluidleitung 55 zwischen den beiden Ausgleichsräumen 39; 51, wobei die Fluidleitung 55 ebenfalls innerhalb des Leitungsverteilers 13 ausgeführt ist und in einer äußeren Anschlussfläche 57 mündet, an der ein Sperrventil 59 fixiert ist. [Fig. 2]

Eine sechste Fluidleitung 61, die in dieser konstruktiven Ausgestaltung an den Fluidleitungen 27; 45 zwischen den Arbeitsräumen 9; 11 und den Dämpfventilen 31; 49 angeschlossen sind, erstrecken sich, bezogen auf den Zylinder 3, radial in Richtung einer zweiten Anschlussfläche 63 für eine Pumpeinrichtung 65, die Betriebsmedium wechselweise zwischen den beiden Arbeitsräumen 9; 11 umpumpen kann.

Aus der Zusammenschau der Figuren 1 und 2 ist ersichtlich, dass der Leitungsverteiler 13 zweiteilig ausgeführt ist, wobei ein erstes Gehäuse 67 direkt mit dem Zylinder 3 verbunden ist. Ein zweites Gehäuse 69 erstreckt sich radial zum Zylinder 3, wobei sich durch die geteilte Bauform des Leitungsverteilers 13 eine vereinfachte Herstellung der Fluidleitungen realisieren lässt. Alle Fluidleitungen bestehen maximal aus zwei Leitungsabschnitte und einer Eckverbindung. Beide Gehäuseteile 67; 69 sind über eine plane Kontaktfläche 71 druckdicht miteinander verbunden.

Abgesehen von einem zylindrischen Ansatz, der in Überdeckung mit dem Zylinder steht, ist der Leitungsverteiler 13 bevorzugt quaderförmig ausgestaltet, um die Planflächen 71 zwischen den beiden Gehäuseteilen 67; 69 und Anschlussflächen 57; 63 den externen Einrichtungen leicht darstellen zu können.

Zusätzlich bietet der Leitungsverteiler die Möglichkeit, ein beliebiges Anschlussorgan 35 zu tragen.

Sollte z. B. aus Bauraumgründen eine Montage des Sperrventils 59 an der Anschlussfläche 57 nicht sinnvoll sein, dann besteht noch die Möglichkeit das Sperrventil 59 innerhalb eines vom Ausgleichsraum 51 begrenzten Aufnahmeraums 73 [Fig. 1] im Gehäuse 69 anzuordnen.

### Bezugszeichen

- 1: Aktuator
- 3: Zylinder
- 5: Kolbenstange
- 7: Kolben
- 9: erster Arbeitsraum
- 11: zweiter Arbeitsraum
- 13: Leitungsverteiler
- 15: Standrohr
- 17: Mantelfläche
- 19: Oberfläche
- 21: Überlauföffnung
- 23: Hohlraum
- 25: Anschlussöffnung
- 27: erste Fluidleitung
- 29: Aufnahme
- 31: Dämpfventil
- 33: Versorgungskabel
- 35: Anschlussorgans
- 37: zweite Fluidleitung
- 39: erster Ausgleichsraum
- 41: Belüfter
- 43: Gasblase
- 45: dritte Fluidleitung
- 47: zweite Aufnahme
- 49: zweites Dämpfventil
- 51: zweiter Ausgleichsraum
- 53: vierte Fluidleitung
- 55: fünfte Fluidleitung
- 57: Anschlussfläche
- 59: Sperrventil
- 61: sechste Fluidleitung
- 63: zweite Anschlussfläche
- 65: Pumpeinrichtung
- 67: erstes Gehäuse
- 69: zweites Gehäuse
- 71: Planfläche
- 73: Aufnahmeraum

## Patentansprüche

1. Hydraulischer Aktuator (1), umfassend einen Zylinder (3), in dem ein Kolben (7) an einer axial beweglichen Kolbenstange (5) einen ersten und einen zweiten Arbeitsraum (9; 11) voneinander trennt, wobei beide Arbeitsräume (9; 11) über eine Fluidleitung (27; 45) jeweils mit einem Ausgleichsraum (39; 51) verbunden sind und beide Arbeitsräume (9; 11) an eine Pumpeinrichtung (65) angeschlossen sind, die Betriebsmedium zwischen den beiden Arbeitsräumen (9; 11) wechselweise umpumpt, wobei innerhalb einer Fluidleitung zwischen mindestens einem Arbeitsraum (9; 11) und einem Ausgleichsraum (39; 51) eine verstellbare Ventileinrichtung (31; 49) angeordnet ist,
**dadurch gekennzeichnet, dass** der Zylinder (3) mit einem Leitungsverteiler (13) verbunden ist, wobei der Leitungsverteiler (13) die Fluidleitungen (27; 45; 61) zwischen den Arbeitsräumen (9; 11) und den Ausgleichsräumen (39; 51) sowie zu der Pumpeinrichtung (65) aufweist.

2. Hydraulischer Aktuator nach Anspruch 1, **dadurch gekennzeichnet, dass** der Zylinder (3) eine Gleichrichtungseinrichtung aufweist, die das von dem Kolben (7) verdrängte Betriebsmedium unabhängig von der Bewegungsrichtung der Kolbenstange (5) dem Leitungsverteiler (13) zuführt.

3. Hydraulischer Aktuator nach Anspruch 1, **dadurch gekennzeichnet, dass** der Leitungsverteiler (13) den Zylinder (3) endseitig begrenzt.

4. Hydraulischer Aktuator nach Anspruch 1, **dadurch gekennzeichnet, dass** der Leitungsverteiler (13) mindestens zwei Gehäuseteile (67; 69) aufweist, die über eine Kontaktfläche (71) abgedichtet miteinander verbunden sind.

5. Hydraulischer Aktuator nach Anspruch 4, **dadurch gekennzeichnet, dass** die Kontaktfläche (71) als Planfläche ausgeführt ist.

6. Hydraulischer Aktuator nach Anspruch 4, **dadurch gekennzeichnet, dass** mindestens ein Gehäuse eine Aufnahme (29; 47) für eine Dämpfventileinrichtung (31; 49) aufweist.

7. Hydraulischer Aktuator nach Anspruch 1, **dadurch gekennzeichnet, dass** der Leitungsverteiler (13) eine Anschlussfläche (63) für die Pumpeinrichtung (65) aufweist.

8. Hydraulischer Aktuator nach Anspruch 1, **dadurch gekennzeichnet, dass** der Leitungsverteiler (13) eine Fluidleitung (55) zwischen den beiden Ausgleichsräumen (39; 51) aufweist, wobei die Fluidleitung (55) zwischen den beiden Ausgleichsräumen (39; 51) eine steuerbare Ventileinrichtung (59) aufweist.

9. Hydraulischer Aktuator nach Anspruch 8, **dadurch gekennzeichnet, dass** die steuerbare Ventileinrichtung (59) zwischen beiden Ausgleichsräumen (39; 51) an einer äußeren Anschlussfläche (57) des Leitungsverteilers (13) befestigt ist.

10. Hydraulischer Aktuator nach Anspruch 1, **dadurch gekennzeichnet, dass** der Ausgleichsraum (39) den Zylinder (3) zumindest teilweise einhüllt.

11. Hydraulischer Aktuator nach Anspruch 1 **dadurch gekennzeichnet, dass** der Ausgleichsraum (51) im Wesentlichen parallel zum Zylinder (3) ausgeführt und am Leitungsverteiler (13) befestigt ist.
